Europäisches Patentamt

European Patent Office

Office européen des brevets

(11) Numéro de publication : **0 065 887**
**B1**

(12) **FASCICULE DE BREVET EUROPÉEN**

(45) Date de publication du fascicule du brevet :
25.07.84

(21) Numéro de dépôt : 82400622.5

(22) Date de dépôt : 05.04.82

(51) Int. Cl.³ : **F 16 J 15/32**, F 16 C 33/78

(54) **Joint d'étanchéité tournant entre pièces coaxiales à armature métallique de montage.**

(30) Priorité : **13.05.81 FR 8109476**

(43) Date de publication de la demande :
**01.12.82 Bulletin 82/48**

(45) Mention de la délivrance du brevet :
**25.07.84 Bulletin 84/30**

(84) Etats contractants désignés :
**DE GB IT**

(56) Documents cités :
**DE-B- 1 151 415**
**FR-A- 2 296 800**
**FR-A- 2 430 555**
**US-A- 2 240 252**

(73) Titulaire : **SOCIETE NOUVELLE DE ROULEMENTS
S.A.**
**Boîte Postale 17 1, rue des Usines**
**F-74010 Annecy Cedex (FR)**

(72) Inventeur : **Sonnerat, Claude**
**Les Lessières Route des Argos**
**F-74000 Annecy-Le-Vieux (FR)**

(74) Mandataire : **Ernst-Schonberg, Michel et al**
**R.N.U.R. S. 0804 B.P. 103 8 & 10, avenue Emile-Zola**
**F-92109 Boulogne Billancourt (FR)**

## Description

L'invention se rapporte à un joint d'étanchéité tournant entre pièces coaxiales du type comportant une armature métallique de montage constituée à l'aide de deux anneaux de section générale en L disposés tête bêche pour constituer le logement d'une garniture à lèvres d'étanchéité solidarisée à l'un des anneaux.

Selon un mode de réalisation connu, l'un des anneaux présente un rebord de retenue axiale de l'autre anneau formé après montage de la garniture.

Un tel agencement permet de constituer un ensemble monobloc en formant, toutefois en cours de fabrication sur l'un des anneaux, le rebord de retenue de l'autre.

La forme de réalisation de l'anneau portant le rebord nécessite alors l'emploi d'une section élaborée dont la configuration doit autoriser la déformation locale désirée à l'obtention de ce rebord de retenue.

Le joint suivant l'invention permet de supprimer cet inconvénient car il propose d'intégrer l'ensemble des fonctions au niveau du joint proprement dit.

Le brevet allemand DE-B-1 151 415 décrit une garniture présentant un rebord de retenue d'un anneau en forme de L. Ce rebord n'a cependant pas pour fonction d'assurer par lui-même une étanchéité.

Selon l'invention une lèvre d'étanchéité et de maintien complémentaire, solidaire de la garniture fixée à l'un des anneaux repose sur le bord externe de l'autre anneau dans le but de retenir l'ensemble des deux anneaux en enfermant cette garniture.

Une telle réalisation se prête avantageusement à la confection d'un joint d'étanchéité monobloc dont l'agencement des constituants procure à celui-ci une faculté d'absorption de défauts d'alignement ou de concentricité entre les deux pièces coaxiales.

Selon une particularité de l'invention, un tel joint peut être utilisé comme palier autolubrifiant entre pièces coaxiales soumises à de très faibles charges supportées alors élastiquement par la garniture enfermée entre les deux anneaux.

D'autres particularités et caractéristiques d'un joint tournant selon l'invention apparaîtront dans la description d'un exemple de réalisation, dans lequel :

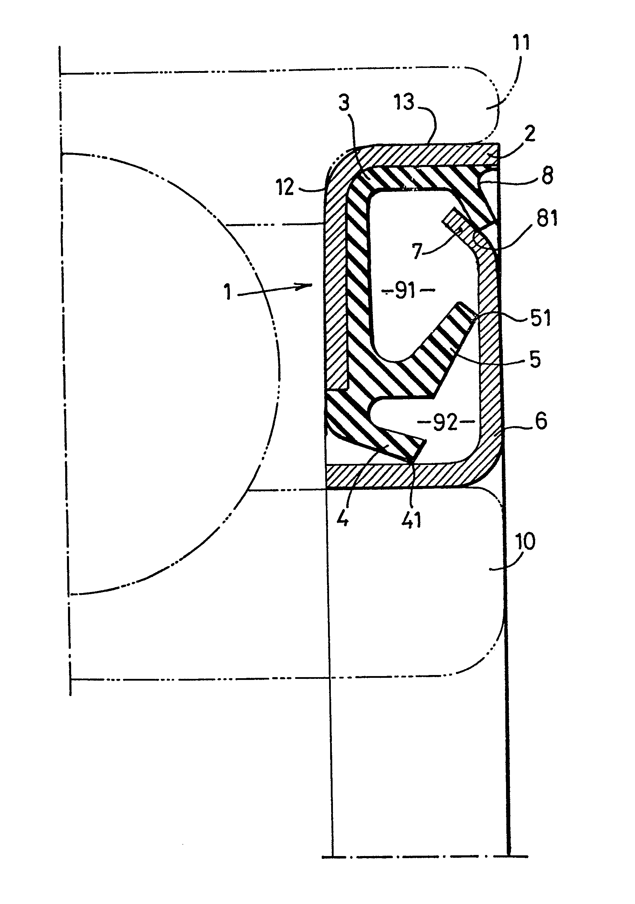

La figure est une vue en coupe transversale du joint tournant.

Le joint tournant représenté est figuré dans l'état qu'il est amené à prendre une fois monté entre deux pièces coaxiales constituées à titre d'exemple non limitatif par la bague interne 10 et la bague externe 11 d'un roulement, cette dernière présentant un épaulement d'arrêt 12 au fond d'un alésage de montage 13.

Le joint tournant 1 comporte une armature métallique de montage constitué à l'aide d'un anneau extérieur 2 de section générale en L inversé venant s'emmancher dans l'alésage de montage 13 pour venir en butée sur l'épaulement 12. Sur l'anneau 2 est surmoulée une garniture 3 à deux lèvres principales d'étanchéité, l'une radiale 4, l'autre axiale 5 toutes deux en contact avec un anneau intérieur 6 de section générale en L disposé tête-bêche par rapport à l'anneau extérieur 2.

L'anneau intérieur 6, dont une aile s'étend radialement vers l'autre anneau extérieur 2, possède à l'extrémité de cette aile un bord incliné 7 orienté vers la partie de l'anneau 2 fixée dans l'alésage de montage 13 sur laquelle repose une troisième lèvre d'étanchéité et de maintien 8 de la garniture 3. Cette lèvre d'étanchéité et de maintien 8 exerce un effort axial sur l'anneau intérieur 6 ce qui rend les divers éléments du joint difficilement dissociables, le joint ainsi constitué est prêt au montage, c'est-à-dire que le montage s'effectue simultanément sur les pièces coaxiales 10, 11.

De ce fait, toutes les parties fonctionnelles du joint, telles que la garniture 3 à lèvres 4, 5, 8 et les surfaces en contact avec lesdites lèvres, sont intégrées et ne subissent pas les risques d'une détérioration par suite des chocs ou pollution lors du montage.

La disposition particulière des trois lèvres d'étanchéité 4, 5, 8 facilite la lubrification de celles-ci. En effet les chambres 91, 92 formées respectivement entre la lèvre axiale 5 et la lèvre de maintien 8 d'une part et entre la lèvre axiale 5 et la lèvre radiale 4 d'autre part seront garnies de graisse, dans le but de parfaire la lubrification des lignes de contact respectives 41, 51, 81 desdites lèvres 4, 5, 8 avec l'anneau intérieur 6.

Cette lubrification limite l'usure des lèvres et augmente la durée de vie du joint. La graisse utilisée dans les chambres 91, 92 peut donc être indépendante de celle qui est utilisée pour assurer la lubrification des pièces coaxiales. On peut ainsi choisir le lubrifiant le mieux adapté au problème d'étanchéité à résoudre.

On pourra par exemple remplir la chambre 92 d'une graisse dont la qualité assure la lubrification des lèvres 4, 5, en fonction des matériaux en présence et des températures d'utilisation et remplir la chambre 91 d'une graisse spéciale résistante aux agents extérieurs tels que l'eau ou la boue. Ceci est particulièrement intéressant lorsque le joint est utilisé sur un roulement de roue de véhicule automobile dont on désire augmenter la durée de vie et la fiabilité.

Le joint conforme à l'invention pourra donc être avantageusement utilisé dans l'ensemble des cas où l'on se propose de protéger un dispositif mécanique tournant, du milieu extérieur.

## Revendications

1. Joint d'étanchéité tournant entre pièces coaxiales à armature métallique de montage constitué à l'aide de deux anneaux (2,6) de section générale en L, disposés tête-bêche pour constituer le logement d'une garniture (3) à lèvres d'étanchéité solidarisée à l'un des anneaux : et présentant un moyen de retenue de l'autre anneau, caractérisé en ce que ledit moyen de retenue est constitué par une lèvre d'étanchéité complémentaire (8) solidaire de la garniture (3) fixée à l'un des anneaux (2 ou 6), reposant sur le bord (7) de l'autre anneau (6 ou 2) dans le but de retenir l'ensemble des deux anneaux en enfermant cette garniture.

2. Joint d'étanchéité selon la revendication 1, caractérisé par le fait que les chambres formées (91 et 92) entre les lèvres d'étanchéité sont garnies de graisse.

3. Joint d'étanchéité selon la revendication 2, caractérisé par le fait que la chambre (91) formée entre la lèvre d'étanchéité et de retenue (8) d'un anneau (2 ou 6) et une autre lèvre (5), reçoit une graisse spéciale.

## Claims

1. A rotary seal between coaxial components comprising a metal assembly support structure formed by means of two rings (2, 6) of general L-shaped section which are disposed in head-to-tail relationship to form the housing for a lip-type sealing member (3) which is fixed with respect to one of the rings, and having a means for retaining the other ring, characterised in that said retaining means comprises a complementary sealing lip (8) which is fixed with respect to the sealing member (3) that is secured to one of the rings (2 or 6), which rests on the edge (7) of the other ring (6 or 2) in order to retain the two rings in the assembled condition of enclosing said sealing member.

2. A rotary seal according to claim 1, characterised in that the chambers (91 and 92) formed between the sealing lips are filled with grease.

3. A rotary seal according to claim 1, characterised in that the chamber (91) formed between the lip (8) for sealing and retaining a ring (2 or 6) and another lip (5) receives a special grease.

## Ansprüche

1. Zwischen koaxialen Teilen sich drehende Abdichtung mit metallischem Montage-Gehäuse, das mittels zweier Ringe (2, 6) gebildet ist mit im wesentlichen L-förmigem Querschnitt, die verkehrt zueinander angeordnet sind um eine Aufnahmeöffnung für eine Dichtungspackung (3) mit Dichtungslippen zu bilden, die mit einem der Ringe fest verbunden ist und wobei eine Rückhalteanordnung für den anderen Ring vorgesehen ist, dadurch gekennzeichnet, daß diese Rückhalteanordnung aus einer zusätzlichen Dichtungslippe (8) besteht, die fest mit der an einem der Ringe (2 oder 6) befestigten Dichtungspackung (3) verbunden ist, und sich am Rand (7) des anderen Ringes (6 oder 2) abstützt um die Gesamtheit der beiden, die Dichtungspackung einschließenden Ringe zusammenzuhalten.

2. Abdichtung nach Anspruch 1, dadurch gekennzeichnet, daß die zwischen den Dichtungslippen gebildeten Kammern (91 und 92) mit Fett gefüllt sind.

3. Abdichtung nach Anspruch 2, dadurch gekennzeichnet, daß die zwischen der Dichtungs- und Rückhaltelippe (8) eines Ringes (2 oder 6) und einer anderen Lippe (5) gebildete Kammer (91) mit einem Spezialfett gefüllt ist.